# EUROPEAN PATENT SPECIFICATION

(11) **EP 3 187 797 B1**
(45) Date of publication and mention of the grant of the patent: **17.10.2018**
(21) Application number: 15836401.8
(22) Date of filing: 30.07.2015
(51) Int. Cl.: F25B 17/08

(54) **ADSORPTION REFRIGERATOR AND ADSORPTION REFRIGERATION METHOD**
ADSORPTIONSKÄLTEANLAGE UND ADSORPTIONSKÜHLVERFAHREN
GROUPE FRIGORIFIQUE À ADSORPTION ET PROCÉDÉ DE RÉFRIGÉRATION PAR ADSORPTION

(30) Priority: 29.08.2014 JP 2014175365
(43) Date of publication of application: 05.07.2017
(73) Proprietor: National University Corporation Tokyo University Of Agriculture and Technology, Tokyo 183-8538 (JP)
(72) Inventor: AKISAWA Atsushi, Fuchu-shi Tokyo 183-8538 (JP)
(74) Representative: Michalski Hüttermann & Partner Patentanwälte mbB
(86) International application number: PCT/JP2015/071677
(87) International publication number: WO 2016/031484

(56) References cited:
- WO-A1-2014/003013
- WO-A1-2014/003013
- JP-A- H05 248 727
- JP-A- H05 248 727
- JP-A- H08 240 357
- JP-A- H09 166 367
- JP-A- H09 166 367
- JP-A- 2005 061 726
- JP-A- 2006 300 414
- US-A- 5 619 866

## Description

### BACKGROUND

### 1. TECHNICAL FIELD

The present invention relates to an adsorption chiller and an adsorption chilling method.

### 2. RELATED ART

In order to secure an adsorption and desorption amount of a refrigerant steam in an adsorption reactor even when a temperature of a hot water source is low, an adsorption chiller comprising six adsorption reactors which are multistaged into three stages is known.

### (For instance, refer to Non-Patent Document 1).

### [Prior Art Document]

### [Non-Patent Document]

[Non-Patent Document 1] BIDYUT B.SAHA, ELISA C.BOELMAN, TAKAO KASHIWAGI "COMPUTATIONAL ANALYSIS OF AN ADVANCED ADSORPTION REFRIGERATION CYCLE" 1995 Energy Volume 20, No 10, pp 983-994
[Patent Document 1] WO 2014/003013 A1 describes an adsorption refrigerator in which high cooling capacity is achieved while the volume occupied by the entire device is kept small.
[Patent Document 2] US 5619866 A describes an (n)th adsorber and (n+1)th adsorber among a plurality of adsorbers in an adsorption process that are connected thermally in series, and adsorbent of the (n)th adsorber which is a previous stage is cooled by adsorption of refrigerant by adsorbent of the (n+1)th adsorber which is a subsequent stage.
[Patent Document 3] JP H05 248727 A describes at least two of adsorption towers, in each of which a solid adsorbent and a heating and cooling means therefor are placed, that are connected in series between an evaporator and a condenser to form a refrigerant circuit, in which a refrigerant can flow.
[Patent Document 4] JP H09 166367 A describes a heat exchange fluid in a heat exchange flow passage which is cooled down to a low temperature by that a liquid refrigerant in an intermediate heat exchanger is vaporized and adsorbed by a second-stage adsorbing unit.

However, there has been a problem that because the size of the adsorption reactor is very big, the conventional adsorption chiller which uses six adsorption reactors becomes very big, and a wide installation space is needed.

### SUMMARY

An adsorption chiller of a first aspect of the present invention comprises an evaporator which generates cold heat by vaporizing a liquefied refrigerant, a first adsorption reaction section which adsorbs the vaporized refrigerant generated from the evaporator and then vaporizes the refrigerant again, a second adsorption reaction section which adsorbs the vaporized refrigerant generated from the first adsorption reaction section and then vaporizes the refrigerant again, and a condenser which, by cooling and liquefying the vaporized refrigerant generated from the second adsorption reaction section, supplies the refrigerant to the evaporator, at least one of the first adsorption reaction section and the second adsorption reaction section includes at least two adsorption reactors, a first coupling pipe which couples the two adsorption reactors, and a first control valve which controls opening and closing of the first coupling pipe.

The summary clause does not necessarily describe all necessary features of the embodiments of the present invention. The present invention may also be a sub-combination of the features described above.

### BRIEF DESCRIPTION OF THE DRAWINGS

Fig. 1 is a schematic view showing a first state of an adsorption chiller 10.
Fig. 2 is a schematic view showing a second state of an adsorption chiller 10.
Fig. 3 is a schematic view showing a third state of an adsorption chiller 10.
Fig. 4 is a schematic view showing a fourth state of an adsorption chiller 10.
Fig. 5 is a schematic view showing a fifth state of an adsorption chiller 10.
Fig. 6 is a schematic view showing a sixth state of an adsorption chiller 10.
Fig. 7 is a schematic view showing a seventh state of an adsorption chiller 10.
Fig. 8 is a schematic view showing an eighth state of an adsorption chiller 10.
Fig. 9 shows an adsorption chiller 10 time cycle.
Fig. 10 is a schematic view showing a conventional adsorption chiller 200.
Fig. 11 is a table showing physical property values and basic operating conditions used for a simulation.
Fig. 12 is a table showing an operation time of each process.
Fig. 13 is a graph showing a COP value and a SCP value.
Fig. 14 shows another example of another time cycle of an adsorption chiller 10.
Fig. 15 is a schematic view showing another adsorption chiller 300.
Fig. 16 is a schematic view showing another adsorption chiller 400.

### DESCRIPTION OF EXEMPLARY EMBODIMENTS

Hereinafter, the present invention is described through the embodiments of the invention. However, the following embodiments do not limit the invention according to the scope of claim. Also, all the combinations of the features described in the embodiments are not necessarily essential to means provided by aspects of the invention.

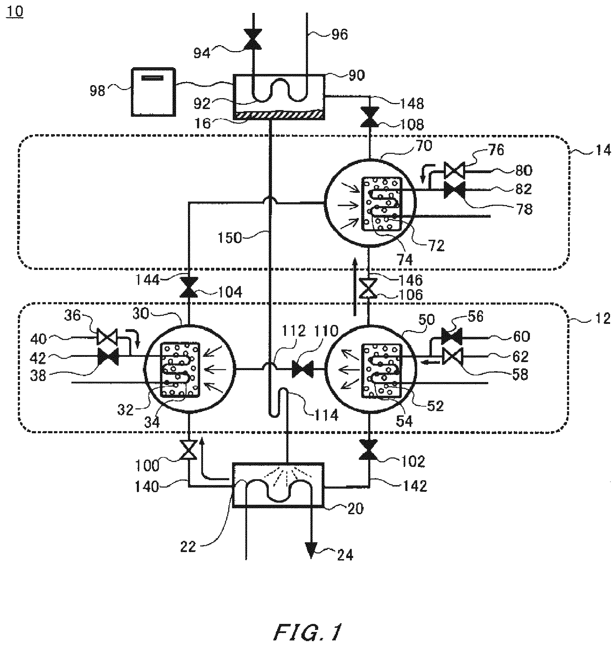

Fig. 1 is a schematic view showing a first state of an adsorption chiller 10. The adsorption chiller 10 has a first adsorption reaction section 12, a second adsorption reaction section 14, an evaporator 20, a condenser 90 , and a control part 98. The first adsorption reaction section 12, the second adsorption reaction section 14, the evaporator 20, and the condenser 90 are in a state of being sealed, and respective inner parts are maintained in a decompression state.

The first adsorption reaction section 12 has two adsorption reactors 30, 50 which adsorbs a vaporized refrigerant 16 generated from the evaporator 20 and then vaporizes the refrigerant again. The adsorption reactor 30 comprises an adsorbent 32 which adsorbs the refrigerant 16 and a heat exchanger 34 which heats and cools the adsorbent 32. The adsorbent 32 is provided around the heat exchanger 34, and is heated and cooled by the heat exchanger 34. The heat exchanger 34 is connected to a cooling water source 40 via a control valve 36, and is connected to a hot water source 42 via a control valve 38.

Because the control valve 36 is closed and the control valve 38 is opened, hot water is supplied to the heat exchanger 34. Thereby, the heat exchanger 34 is heated, the adsorbent 32 and the refrigerant 16 adsorbed by the adsorbent 32 are also heated and vaporized. Because the control valve 38 is closed and the control valve 36 is opened, cooling water is supplied to the heat exchanger 34. Thereby, the heat exchanger 34 is cooled, and the adsorbent 32 is also cooled.

The adsorption reactor 50 comprises an adsorbent 52 which adsorbs the refrigerant 16 and a heat exchanger 54 which heats and cools the adsorbent 52. The adsorbent 52 is provided around the heat exchanger 54, and is heated and cooled by the heat exchanger 54. The heat exchanger 54 is connected to a cooling water source 60 via a control valve 56, and is connected to a hot water source 62 via a control valve 58. Note that heating and cooling to the adsorbent 52 and the refrigerant 16 which is adsorbed by the adsorbent 52 by the heat exchanger 54 is the same as the adsorption reactor 30, so the description will be omitted.

The adsorption reactor 30 is coupled to the second adsorption reaction section 14 via a coupling pipe 144 and a control valve 104, and the adsorption reactor 50 is coupled to the second adsorption reaction section 14 via a coupling pipe 146 and a control valve 106. Also, the adsorption reactor 30 and the adsorption reactor 50 are coupled to each other via a control valve 110 and a coupling pipe 112.

The second adsorption reaction section 14 has an adsorption reactor 70 which adsorbs a vaporized refrigerant 16 generated from the first adsorption reaction section and then vaporizes the refrigerant again. The adsorption reactor 70 comprises an adsorbent 72 which adsorbs the refrigerant 16 and a heat exchanger 74 which heats and cools the adsorbent 72. The adsorbent 72 is provided around the heat exchanger 74, and is heated and cooled by the heat exchanger 74. The heat exchanger 74 is connected to a cooling water source 80 via a control valve 76, and is connected to a hot water source 82 via a control valve 78. Note that heating and cooling to the adsorbent 52 and the refrigerant 16 which is adsorbed by the adsorbent 52 by the heat exchanger 54 is the same as the adsorption reactor 30, so the description will be omitted.

The adsorption reactor 70 is coupled to the adsorption reactor 30 via the coupling pipe 144 and the control valve 104, and is coupled to the adsorption reactor 50 via a coupling pipe 146 and a control valve 106. Also, the adsorption reactor 70 is coupled to the condenser 90 via a coupling pipe 148 and a control valve 108.

The evaporator 20 outputs cold heat by vaporizing the liquefied refrigerant 16. The evaporator 20 comprises a heat exchanger 22 to which a cold heat output pipe 24 is connected. Inside the evaporator 20, a liquefied solvent is atomized toward the heat exchanger 22. The atomized refrigerant 16 deprives the heat exchanger 22 of latent heat, and is vaporized. Thereby, the heat exchanger 22 is cooled to about five degrees Celsius, the cold heat output pipe 24 and the refrigerant solution which is circulated inside the cold heat output pipe 24 is cooled by the cooled heat exchanger 22 to about eight degrees Celsius. Then, the cooled refrigerant solution is outputted to a place where cold heat is needed. The evaporator 20 is coupled to the adsorption reactor 30 via a coupling pipe 140 and a control valve 100, and is coupled to the adsorption reactor 50 via a coupling pipe 142 and a control valve 102.

The condenser 90 cools and liquefies the vaporized refrigerant 16 generated from the second adsorption reaction section 14. The condenser 90 supplies the liquefied refrigerant 16 to the evaporator 20. The condenser 90 comprises a heat exchanger 92 which is connected to a cooling water source 96 via a control valve 94. Because the control valve 94 is opened, cooling water is supplied to the heat exchanger 92. Thereby, the heat exchanger 92 is cooled, and liquefaction of the vaporized refrigerant 16 is promoted. The liquefied refrigerant 16 is stored inside the condenser 90. The condenser 90 is coupled to the evaporator 20 via a coupling pipe 150 and a decompression valve 114. By providing the decompression valve 114, while maintaining a predetermined pressure differential between the evaporator 20, the condenser 90 supplies a predetermined amount of the liquefied refrigerant 16 to the evaporator 20.

The control part 98 is configured by a computer device, and has a central processing device, a storage device, and the like. In the storage device, a program which controls opening and closing of respective control valves is stored in advance. The control part 98 controls opening and closing of respective control valves according to the program.

Note that, in the example shown in Fig. 1, the refrigerant 16 is, for instance, water. Also, a temperature of cooling water supplied from the cooling water sources 40, 60, 80, 96 is, for instance, at 30 degrees Celsius, and a temperature of hot water supplied from the hot water sources 42, 62, 82 is, for instance, at 45 degrees Celsius.

Also, an adsorbable amount of the refrigerant 16 adsorbed by the adsorbent 72 is preferably larger than an adsorbable amount of the refrigerant 16 adsorbed by the adsorbent 32 and the adsorbent 52. Thereby, the refrigerant 16 which is adsorbed and vaporized in the first adsorption reaction section 12 can be adsorbed to the second adsorption reaction section 14. Note that the adsorbents 32, 52, and 72 are, for instance, silica gels.

Next, a chilling operation of the adsorption chiller 10 is described. The adsorption chiller 10 outputs cold heat from the cold heat output pipe 24 by alternating between from the first state to the eighth state in order. First, the first state will be described using Fig. 1. Note that in from Fig. 1 to Fig. 11, white control valves show control valves which are controlled to open, and black control valves show a control valves which are controlled to close.

In the first state, the control valves 36, 58, 76, 100, 106 are controlled to open, and control valves other than the above are controlled to close. The refrigerant 16 vaporized in the evaporator 20 moves to the adsorption reactor 30 through the coupling pipe 140 by a pressure differential between the evaporator 20 and the adsorption reactor 30. The refrigerant 16 which moved to the adsorption reactor 30 is adsorbed by the adsorbent 32. This process is an adsorbing process.

Because the vaporized refrigerant 16 dissipates an adsorption heat when adsorbed to the adsorbent 32, the adsorbent 32 is heated by the refrigerant 16. In the adsorption reactor 30 of the first state, because cooling water is supplied to the heat exchanger 34 from the cooling water source 40, the heat exchanger 34 cools the adsorbent 32. For this reason, because the heated adsorbent 32 is cooled, adsorption of the refrigerant 16 to the adsorbent 32 is promoted. Also, in the adsorption reactor 30, due to adsorption of the refrigerant 16 to the adsorbent 32, an internal pressure of the adsorption reactor 30 lowers. On the other hand, in the evaporator 20, the refrigerant is vaporized, and an internal pressure of the evaporator 20 becomes high.
Thereby, the refrigerant 16 continuously moves from the evaporator 20 to the adsorption reactor 30.

In the adsorption reactor 50, because hot water is supplied to the heat exchanger 54 from the hot water source 62, the heat exchanger 54 heats the adsorbent 52. Thereby, the refrigerant 16 adsorbed by the adsorbent 52 is also heated, the refrigerant 16 is vaporized. This process is a desorbing process.

The vaporized refrigerant 16 moves to the adsorption reactor 70 through the coupling pipe 146 by a pressure differential between the adsorption reactor 50 and the adsorption reactor 70. The refrigerant 16 which moved to the adsorption reactor 70 is adsorbed by the adsorbent 72. Because this adsorbing process is the same as the adsorbing process in the adsorption reactor 30, the description will be omitted.

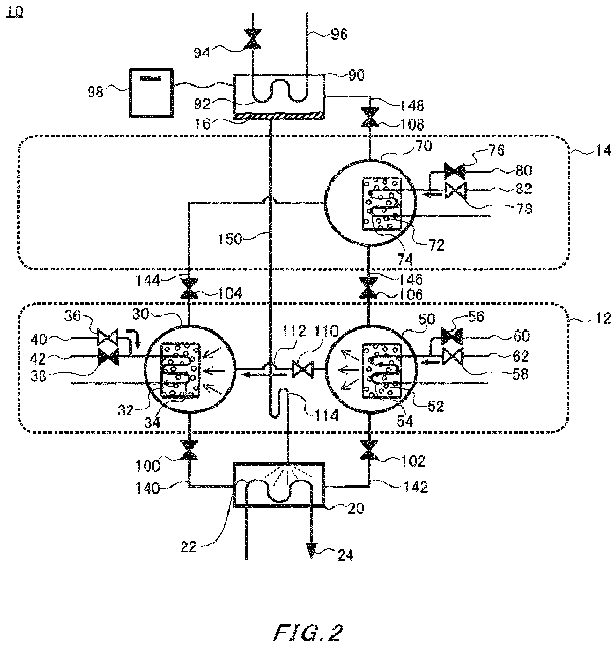

Fig. 2 is a schematic view showing a second state of an adsorption chiller 10. The second state will be described using Fig. 2. In the second state, the control valves 36, 58, 78, 110 are controlled to open, and control valves other than the above are controlled to close.

In the adsorption reactor 50, the heat exchanger 54 maintains a state of being heated, the desorbing process is being executed. The refrigerant 16 vaporized in the adsorption reactor 50 moves to the adsorption reactor 30 through the coupling pipe 112 by a pressure differential between the adsorption reactor 50 and the adsorption reactor 30. In the adsorption reactor 30, the heat exchanger 34 maintains a state of being cooled, the adsorbing process is being executed. Accordingly, the refrigerant 16 which was moved from the adsorption reactor 50 to the adsorption reactor 30 is further adsorbed by the adsorbent 32. In this way, a process in which the adsorption reactor 30 and the adsorption reactor 50 are coupled, the desorbing process is executed in the adsorption reactor 50, and the adsorbing process is executed in the adsorption reactor 30 is a steam regenerating process. Note that the steam regenerating process which is executed in the adsorption reactor 50 in the second state is a steam regenerating process (desorption), and the steam regenerating process which is executed in the adsorption reactor 30 is a steam regenerating process (adsorption).

In a case in which the control valve 110 of the coupling pipe 112 which couples the adsorption reactor 30 and the adsorption reactor 50 is opened, and the steam regenerating process is being executed, the coupling pipe 140 which couples the evaporator 20 and the adsorption reactor 30 is closed by the control valve 100, and the coupling pipe 142 which couples the evaporator 20 and the adsorption reactor 50 is closed by the control valve 102. Here, the coupling pipe 112 is one example of the first coupling pipe, the control valve 110 is one example of the first control valve. The coupling pipe 140 is one example of the second coupling pipe, the control valve 100 is one example of the second control valve, the coupling pipe 142 is one example of the third coupling pipe, and the control valve 102 is one example of the third control valve.

In the adsorption reactor 70, because the control valves 104, 106, 108 are closed, the adsorption reactor 70 is in a state of being closed. In this state, hot water is supplied to the heat exchanger 74 from the hot water source 82, the heat exchanger 74 heats the adsorbent 72. Thereby, the refrigerant 16 adsorbed by the adsorbent 72 is also heated, the refrigerant 16 is vaporized, and the adsorption reactor 70 is filled with the vaporized refrigerant 16. This process is a preheating process. Because this preheating process is executed and the adsorbed refrigerant 16 is vaporized, an internal pressure of the adsorption reactor 70 is increased.

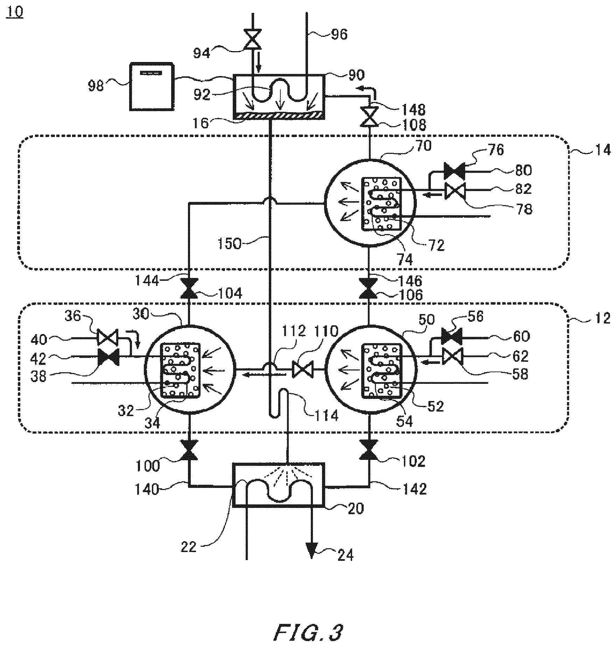

Fig. 3 is a schematic view showing a third state of an adsorption chiller 10. The third state will be described using Fig. 3. In the third state, the control valves 36, 58, 78, 94, 108, 110 are controlled to open, and control valves other than the above are controlled to close.

In the adsorption reactor 30 and the adsorption reactor 50, the steam regenerating process is being continuously executed. In the adsorption reactor 70, the desorbing process is being executed. The vaporized refrigerant 16 generated from the adsorption reactor 70 moves to the condenser 90 through the coupling pipe 148 by a pressure differential between the adsorption reactor 70 and the condenser 90. In the adsorption reactor 70, in the second state, the preheating process is executed, an internal pressure of the adsorption reactor 70 is being increased by the vaporized refrigerant 16. Thereby, the refrigerant 16 rapidly moves to the condenser 90 from the adsorption reactor 70.

In the condenser 90, cooling water is supplied to the heat exchanger 92 from the cooling water source 96, and the heat exchanger 92 is being cooled. Thereby, the vaporized refrigerant 16 is cooled by the heat exchanger 92 and is liquefied. The liquefied refrigerant 16 is stored inside the condenser 90.

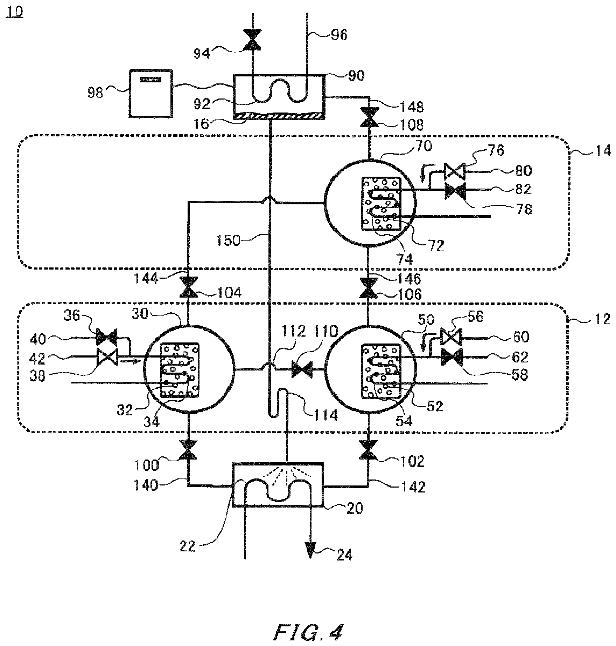

Fig. 4 is a schematic view showing a fourth state of an adsorption chiller 10. The fourth state will be described using Fig. 4. In the fourth state, the control valves 38, 56, 76 are controlled to open, and control valves other than the above are controlled to close.

In the fourth state, because the control valves 100, 104, 110 are closed, the adsorption reactor 30 is in a state of being closed. In this state, in the adsorption reactor 30, the preheating process is executed.

Also, because the control valves 102, 106, 110 are closed, the adsorption reactor 50 is in a state of being closed. In this state, cooling water is supplied to the heat exchanger 54 from the cooling water source 60, the heat exchanger 54 cools the adsorbent 52. By this cooling of the adsorbent 52, the vaporized refrigerant 16 which is present inside the adsorption reactor 50 is adsorbed by the adsorbent 52. This process is a precooling process. In the precooling process, because the vaporized refrigerant 16 is adsorbed to the adsorbent 52, an internal pressure of the adsorption reactor 50 lowers. Also, in the adsorption reactor 70 as well, in a state which the control valves 104, 106, 108 are closed, the precooling process is executed.

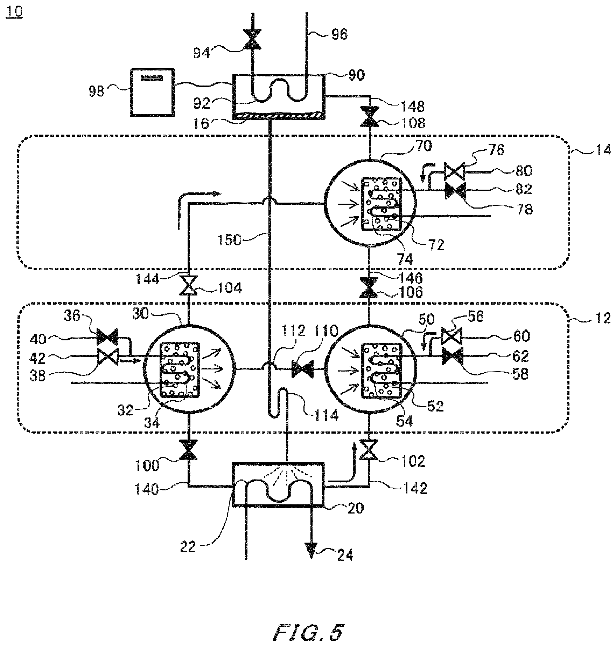

Fig. 5 is a schematic view showing a fifth state of an adsorption chiller 10. The fifth state will be described using Fig. 5. In the fifth state, the control valves 38, 56, 76, 102, 104 are controlled to open, and control valves other than the above are controlled to close.

The refrigerant 16 vaporized in the evaporator 20 moves to the adsorption reactor 50 through the coupling pipe 142 by a pressure differential between the evaporator 20 and the adsorption reactor 50. In the adsorption reactor 50, because the precooling process is executed in the fourth state, an internal pressure of the adsorption reactor 50 is lowered due to adsorption of the refrigerant 16 to the adsorbent 52. Thereby, the refrigerant 16 rapidly moves to the adsorption reactor 50 from the evaporator 20. Then, in the adsorption reactor 50, the adsorbing process is executed, and the vaporized refrigerant 16 generated from the evaporator 20 is adsorbed by the adsorbent 52.

In the adsorption reactor 30, the desorbing process is executed, and the refrigerant adsorbed by the adsorbent 32 is vaporized. The vaporized refrigerant 16 generated from the adsorption reactor 30 moves to the adsorption reactor 70 through the coupling pipe 144. In the adsorption reactor 70, the adsorbing process is executed, and the vaporized refrigerant 16 generated from the adsorption reactor 30 is adsorbed by the adsorbent 72.

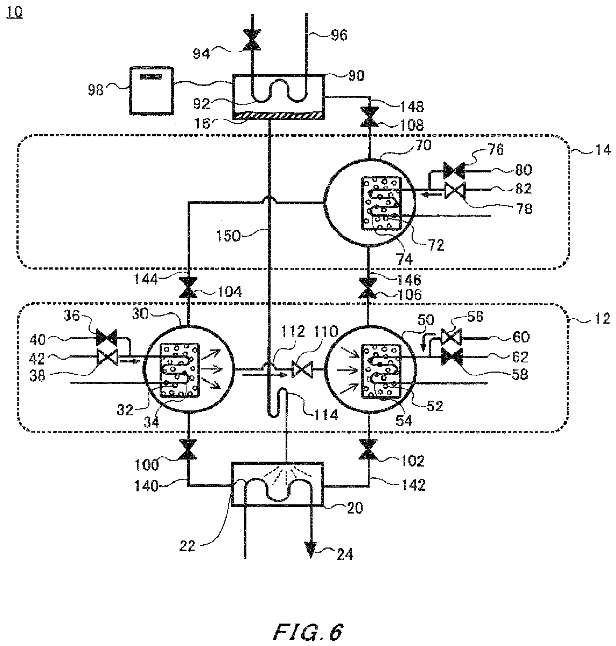

Fig. 6 is a schematic view showing a sixth state of an adsorption chiller 10. The sixth state will be described using Fig. 6. In the sixth state, the control valves 38, 56, 78, 110 are controlled to open, and control valves other than the above are controlled to close.

In the adsorption reactor 30, the heat exchanger 34 maintains a state of being heated, and the desorbing process is executed. The refrigerant 16 vaporized in the adsorption reactor 30 moves to the adsorption reactor 50 through the coupling pipe 112 by a pressure differential between the adsorption reactor 30 and the adsorption reactor 50. In the adsorption reactor 50, the heat exchanger 54 maintains a state of being cooled, and the adsorbing process is executed. Accordingly, the refrigerant 16 which was moved from the adsorption reactor 30 to the adsorption reactor 50 is further adsorbed by the adsorbent 52. In this way, a process in which the adsorption reactor 30 and the adsorption reactor 50 are coupled, the desorbing process is executed in the adsorption reactor 30, and the adsorbing process is executed in the adsorption reactor 50 is also a steam regenerating process. Note that the steam regenerating process which is executed in the adsorption reactor 30 in the sixth state is a steam regenerating process (desorption), and the steam regenerating process which is executed in the adsorption reactor 50 is a steam regenerating process (adsorption). Also, in the adsorption reactor 70, in a state that the control valves 104, 106, 108 are closed, the preheating process is executed.

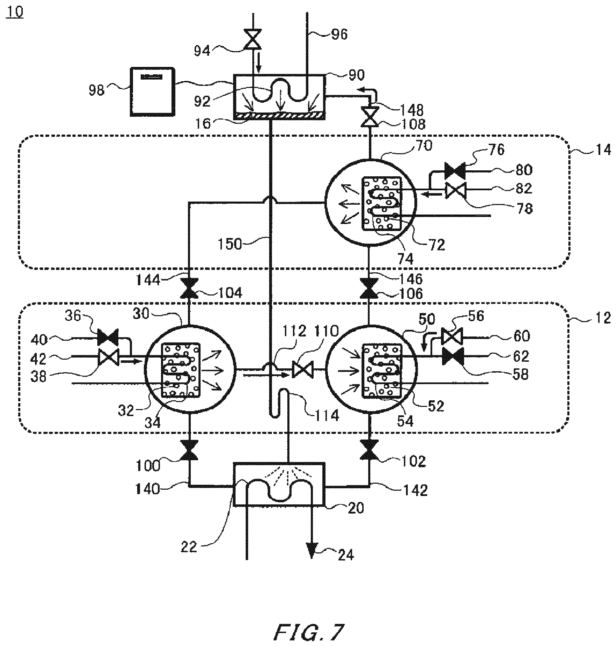

Fig. 7 is a schematic view showing a seventh state of an adsorption chiller 10. The seventh state will be described using Fig. 7. In the seventh state, the control valves 38, 56, 78, 94, 108, 110 are controlled to open, and control valves other than the above are controlled to close.

In the adsorption reactor 30 and the adsorption reactor 50, the steam regenerating process is continuously executed. In the adsorption reactor 70, the desorbing process is executed. The vaporized refrigerant 16 generated from the adsorption reactor 70 moves to the condenser 90 through the coupling pipe 148 by a pressure differential between the adsorption reactor 70 and the condenser 90.

In the condenser 90, cooling water is supplied to the heat exchanger 92 from the cooling water source 96, the heat exchanger 92 is being cooled. Thereby, the vaporized refrigerant 16 is cooled by the heat exchanger 92 and is liquefied. And, the liquefied refrigerant 16 is stored inside the condenser 90.

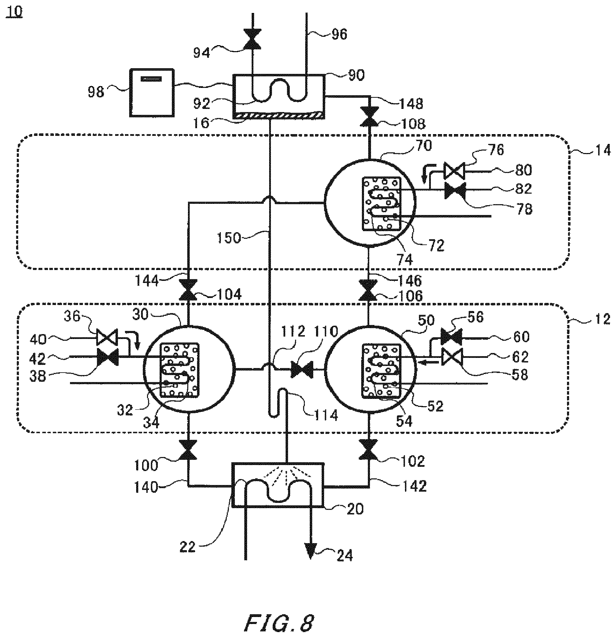

Fig. 8 is a schematic view showing an eighth state of an adsorption chiller 10. The eighth state will be described using Fig. 8. In the eighth state, the control valves 36, 58, 76 are controlled to open, and control valves other than the above are controlled to close.

In the adsorption reactor 30, because the control valves 100, 104, 110 are closed, the adsorption reactor 30 is in a state of being closed. In this state, in the adsorption reactor 30, the precooling process is executed. In the adsorption reactor 50, because the control valves 102, 106, 110 are closed, the adsorption reactor 50 is in a state of being closed. In this state, in the adsorption reactor 50, the preheating process is executed. Also, in the adsorption reactor 70, because the control valves 104, 106, 108 are closed, the adsorption reactor 70 is in a state of being closed. In this state, in the adsorption reactor 70, the precooling process is executed. And, after the eighth state, the state returns to the first state again. In this way, the adsorption chiller 10 continuously outputs cold heat from the cold heat output pipe 24 by repeating from the first state to the eighth state in order.

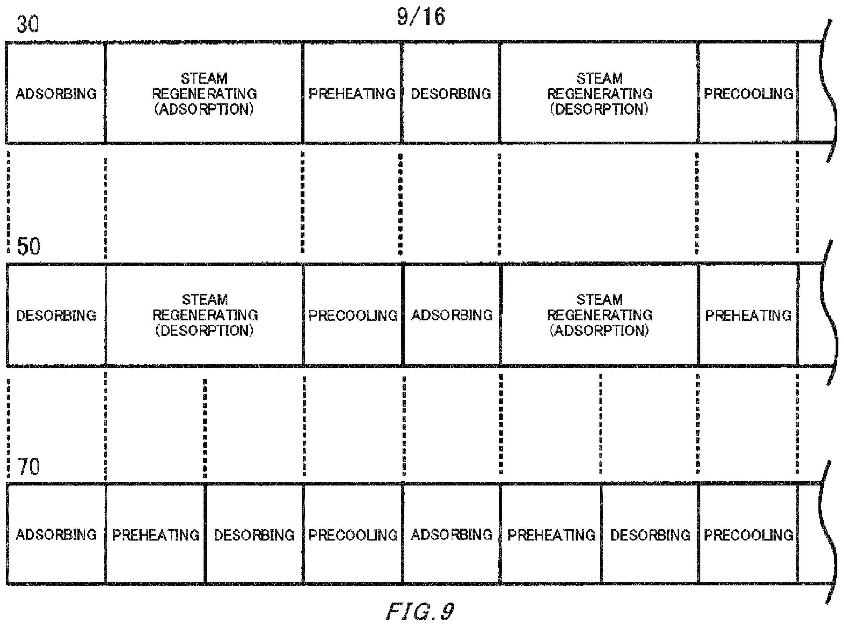

Fig. 9 shows an adsorption chiller 10 time cycle. As described using from Fig. 1 to Fig. 8, in the adsorption reactor 30, the control part 98 executes each process in a cycle of the adsorbing process, the steam regenerating process (adsorption), the preheating process, the desorbing process, the steam regenerating process (desorption), the precooling process. Similarly, in the adsorption reactor 50, the control part 98 executes each process in a cycle of the desorbing process, steam regenerating process (desorption), the precooling process, the adsorbing process, the steam regenerating process (adsorption), the preheating process. Similarly, in the adsorption reactor 70, the control part 98 executes each process in a cycle of the adsorbing process, the preheating process, the desorbing process, the precooling process, the adsorbing process, the preheating process, the desorbing process, the precooling process.

Note that a step in which the adsorbing process, the preheating process, the precooling process are executed in the adsorption reactors 30 and 50 of the first adsorption reaction section 12 is one example of the first adsorption reaction step. Also, the steam regenerating process (adsorption) and the steam regenerating process (desorption) in the adsorption reactors 30 and 50 are one example of the first coupling step. Also, a step in which the adsorbing process, the preheating process, the desorbing process, the precooling process are executed in the adsorption reactor 70 of the second adsorption reaction section 14 is one example of the second adsorption reaction step.

The control part 98, for instance, executes each process of the adsorption reactor 30, the adsorption reactor 50 and the adsorption reactor 70 according to a predetermined start time and end time. Also, when a pressure sensor and/or a temperature sensor are/is provided in respective adsorption reactors of the adsorption chiller 10, and when outputs of these sensors are different from predetermined values, the control to execute each process may be changed. Note that change of a control of each process includes stopping each process.

In the adsorption chiller, if a temperature of a hot water source is low, a desorption capability of an adsorbent lowers. In order to secure an adsorption and desorption amount of a refrigerant steam in an adsorption reactor even when a temperature of a hot water source is low, a technique for multistaging the adsorption reactor is known. That is, a plurality of adsorption reactors which are multistaged into two stages or three stages between the evaporator 20 and the condenser 90 are provided, and the refrigerant is passed to the plurality of adsorption reactors through two stages or three stages. With such a configuration, even when the temperature of the hot water source is at a low temperature, the capability of the adsorption reactor to adsorb and desorb the refrigerant steam can be maintained.

On the other hand, an adsorption chiller having adsorption reactors which are multistaged into three stages comprises six adsorption reactors. Because an adsorption reactor which is necessary for ensuring a refrigerant amount for outputting a practical cold heat is big, an adsorption chiller which has adsorption reactors which are multistaged into three stages is very big. However, in the adsorption chiller 10 shown in the present embodiments, the first adsorption reaction section 12 includes the two adsorption reactors 30, 50, the coupling pipe 112 which couples the two adsorption reactors 30, 50, and the control valve 110 which controls opening and closing of the coupling pipe 112. And, in a state that the control valve 100 of the coupling pipe 140 which couples the adsorption reactor 30 and the evaporator 20 is closed, and that the coupling pipe 142 which couples the adsorption reactor 50 and the evaporator 20 is closed, the adsorption reactor 30 and the adsorption reactor 50 are coupled using the coupling pipe 112 and the control valve 110, and the steam regenerating process is executed. Thereby, adsorption and desorption of a first stage and a second stage in an adsorption chilling device which is divided into multiple stages can be executed by the adsorption reactor 30 and the adsorption reactor 50. By adding the adsorption reactor 70 to this, the adsorption chiller 10 becomes an adsorption chilling device which is configured of three adsorption reactors and is multistaged into three stages. Thereby, the size of the adsorption chiller which is multistaged into three stages can be reduced.

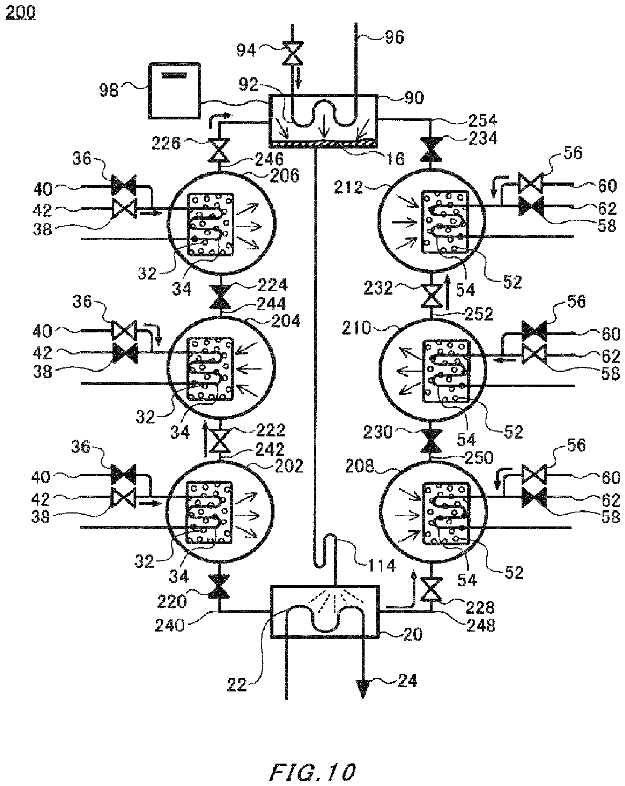

Fig. 10 is a schematic view showing a conventional adsorption chiller 200. The adsorption chiller 200 has six adsorption reactor 202, 204, 206, 208, 210, 212, an evaporator 20, a condenser 90, and a control part 98. Note that in Fig. 10, elements which are common with Fig. 1 are given the same reference numbers, and an overlapped description will be omitted.

In the adsorption chiller 200, the adsorption reactor 202, the adsorption reactor 204, and the adsorption reactor 206 are coupled in series via a coupling pipe 242 and a control valve 222, a coupling pipe 244 and a control valve 224. And, the adsorption reactor 202 is coupled to the evaporator 20 via a coupling pipe 240 and a control valve 220, and the adsorption reactor 206 is coupled to the condenser 90 via a coupling pipe 246 and a control valve 226. Also, the adsorption reactor 208, the adsorption reactor 210, and the adsorption reactor 212 are coupled in series via a coupling pipe 250 and a control valve 230, a coupling pipe 252 and a control valve 232. And, the adsorption reactor 208 is coupled to the evaporator 20 via a coupling pipe 248 and a control valve 228, and the adsorption reactor 212 is coupled to the condenser 90 via a coupling pipe 254 and a control valve 234.

Fig. 10 shows a first state in the adsorption chiller 200. In the first state, the desorbing process is being executed in the adsorption reactor 202, the adsorbing process is being executed in the adsorption reactor 204, and the desorbing process is being executed in the adsorption reactor 206. Also, the adsorbing process is being executed in the adsorption reactor 208, the desorbing process is being executed in the adsorption reactor 210, and the adsorbing process is being executed in the adsorption reactor 212. And, a vaporized refrigerant generated from the evaporator 20 is supplied to the adsorption reactor 208 through the coupling pipe 248. Also, the vaporized refrigerant generated from the adsorption reactor 206 is supplied to the condenser 90 through the coupling pipe 246.

The second state in the adsorption chiller 200 is a state that the first state shown in Fig. 10 is laterally interchanged. That is, the adsorbing process is being executed in the adsorption reactor 202, the desorbing process is being executed in the adsorption reactor 204, and the adsorbing process is being executed in the adsorption reactor 206. Also, the desorbing process is being executed in the adsorption reactor 208, the adsorbing process is being executed in the adsorption reactor 210, and the desorbing process is being executed in the adsorption reactor 212. And, the vaporized refrigerant generated from the evaporator 20 is supplied to the adsorption reactor 202 through the coupling pipe 240, the vaporized refrigerant generated from the adsorption reactor 212 is supplied to the condenser 90 through the coupling pipe 254. The adsorption chiller 200 continuously outputs cold heat from the cold heat output pipe 24, by being controlled so as to alternate between the first state and the second state.

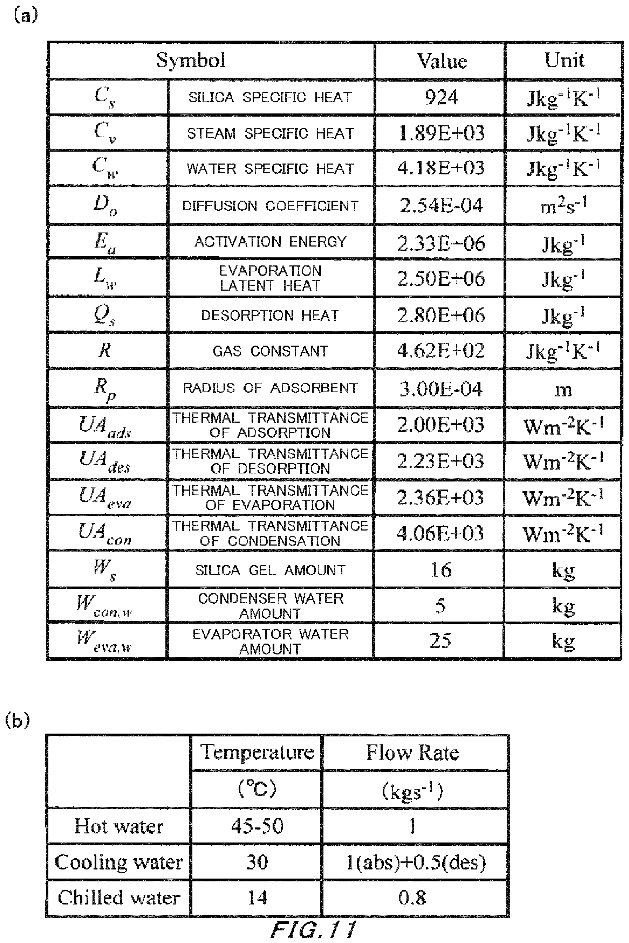

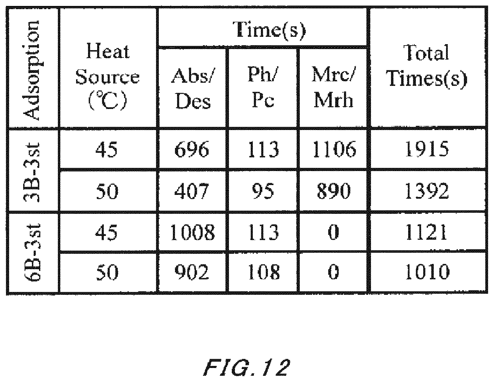

Next, COP (Coefficient Of Performance) and SCP (Specific Cooling Power) will be described. A simulation is performed for the purpose of calculating a COP and a SCP of the adsorption chiller 10 and the adsorption chiller 200. Fig. 11 is a table showing physical property values and basic operating conditions used for the simulation. In Fig. 11, Fig. 11(a) is a table showing each physical property value used for a simulation, and Fig. 11(b) is a table showing basic operating conditions. Also, Fig. 12 is a table showing an operation time of each process.

Fig. 12 is a table showing an operation time of each process. In Fig. 12, '3B-3st' shows a three-staged adsorption chiller configured of three adsorption reactors, that is, the adsorption chiller 10 of the present embodiment. Also, '6B-3st' shows a three-staged adsorption chiller configured of six adsorption reactors, that is, the adsorption chiller 200.

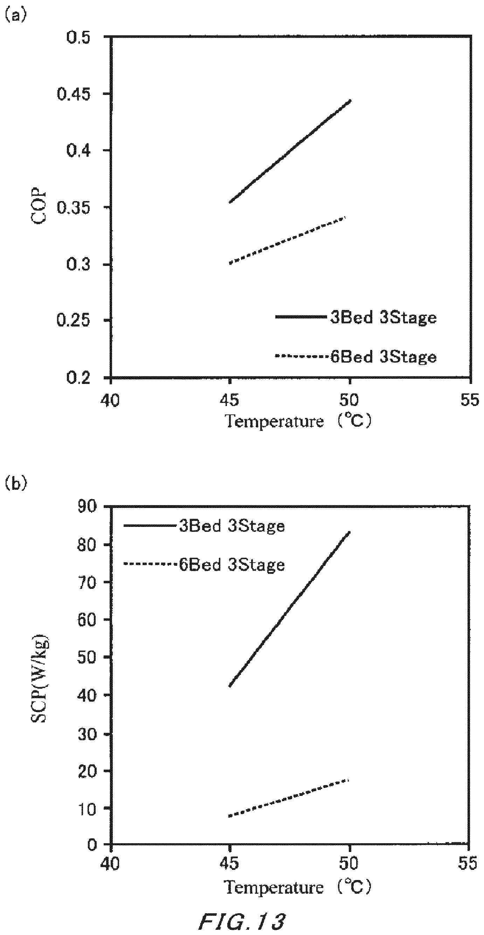

Fig. 13 is a graph showing a COP value and a SCP value. In Fig. 13, Fig. 13(a) is a graph showing a COP value, the vertical axis is a COP value, the horizontal axis is a temperature of hot water source [degrees Celsius]. Also, Fig. 13(b) is a graph showing a SCP value, the vertical axis is a SCP value [W/kg], the horizontal axis is a temperature of hot water source [degrees Celsius].

The COP value is a coefficient value used as a guide of energy consumption efficiency of cooling equipments and the like. Also, the SCP value is a value showing chilling output with respect to weight of an adsorbent. In Fig. 13(a)(b), solid lines show the COP value and the SCP value of the adsorption chiller 10. Also, dashed lines show the COP value and the SCP value of the adsorption chiller 200. From Fig. 11(a)(b), it can be seen that the COP value and the SCP value of the adsorption chiller 10 are vastly improved with respect to the adsorption chiller 200. It shows that the adsorption chiller 10 according to the present embodiment has higher energy consumption efficiency with respect to the conventional adsorption chiller 200, and a bigger chilling output with respect to weight of an adsorbent. Note that if the temperature of the hot water source is from 45 degrees Celsius to 50 degrees Celsius, cold heat is not outputted from a two-staged or one-staged adsorption chiller due to the low temperature of the hot water source. For this reason, the adsorption chiller 10 cannot compare the COP value and the SCP value with the two-staged or one-staged adsorption chiller. However, an adsorption chiller 10 which can output cold heat even though the temperature of the hot water source is low can expand a temperature width of a usable hot water source than the two-staged or one-staged adsorption chiller.

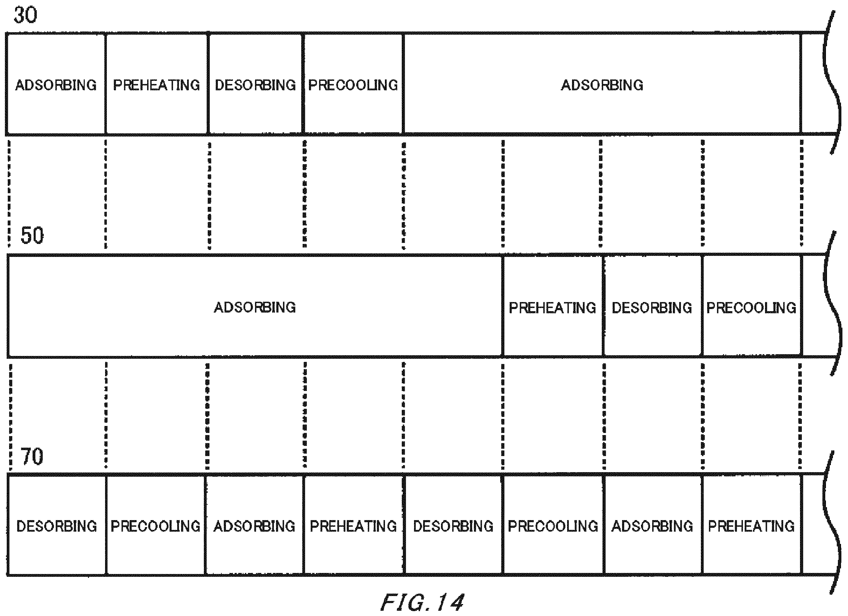

Fig. 14 shows another example of a time cycle of an adsorption chiller 10. The time cycle shown in Fig. 14 does not include a steam generating process. When temperatures of hot water sources 42, 62, 82 which are supplied to adsorption reactors 30, 50, 70 are high, even a two-staged adsorption chiller can output cold heat. For this reason, in the adsorption chiller 10, the control part 98 may make each process of each adsorption reactor executed in a time cycle including the steam regenerating process shown in Fig. 9 when the temperatures of the hot water sources 42, 62, 82 are lower than a predetermined temperature. Or the control part 98 may make each process of each adsorption reactor executed in a time cycle not including the steam regenerating process shown in Fig. 14 when the temperatures of the hot water sources 42, 62, 82 are higher than the predetermined temperature.

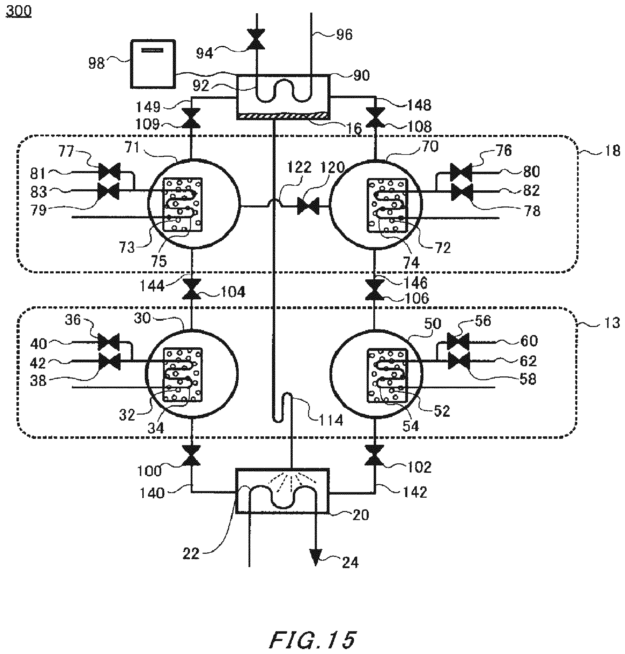

Fig. 15 is a schematic view showing another adsorption chiller 300. The adsorption chiller 300 has a first adsorption reaction section 13, a second adsorption reaction section 18, an evaporator 20, a condenser 90, and a control part 98. Note that in Fig. 15, elements which are common with Fig. 1 are given the same reference numbers, and an overlapped description will be omitted.

In the adsorption chiller 300, although the first adsorption reaction section 13 has two adsorption reactors 30, 50, the adsorption reactor 30 and the adsorption reactor 50 are not coupled. The second adsorption reaction section 18 has two adsorption reactors 70, 71. The adsorption reactor 71, similarly as the adsorption reactor 70, comprises an adsorbent 73 which adsorbs the refrigerant 16 and a heat exchanger 75 which heats and cools the adsorbent 73. The adsorbent 73 is provided around the heat exchanger 75, and is heated and cooled by the heat exchanger 75. The heat exchanger 75 is connected to a cooling water source 81 via a control valve 77, and is connected to a hot water source 83 via a control valve 79.

The adsorption reactor 71 is coupled to the adsorption reactor 30 via a coupling pipe 144 and a control valve 104, and is coupled to the condenser 90 via a coupling pipe 149 and a control valve 109. On the other hand, the adsorption reactor 70 is coupled to the adsorption reactor 50 via a coupling pipe 146 and a control valve 106, and is coupled to the condenser 90 via a coupling pipe 148 and a control valve 108.

Furthermore, the adsorption reactor 70 is coupled to the adsorption reactor 71 via a coupling pipe 122 and a control valve 120. A steam regenerating process is executed between the adsorption reactor 70 and the adsorption reactor 71. In this way, the second adsorption reaction section 18 which is closer to the condenser 90 has the adsorption reactor 70 and the adsorption reactor 71, and makes the adsorption reactor 70 and the adsorption reactor 71 execute the steam regenerating process. Thereby, adsorption and desorption of a second stage and a third stage in an adsorption chiller which is divided into multiple stages can be executed by the adsorption reactor 70 and the adsorption reactor 71.

In the adsorption chiller 300, the adsorbing process, the desorbing process, the precooling process and the preheating process are executed in the adsorption reactor 30. In the adsorption reactor 50, the adsorbing process, the desorbing process, the precooling process and the preheating process are executed as well. Also, in the adsorption reactor 71, corresponding to the adsorption reactor 30, the adsorbing process, the desorbing process, the precooling process, the preheating process and the steam regenerating process are executed. In the adsorption reactor 70, corresponding to the adsorption reactor 50, the adsorbing process, the desorbing process, the precooling process, the preheating process and the steam regenerating process are executed.

With such a configuration, the adsorption chiller 300 is an adsorption chiller which is configured of four adsorption reactors and is multistaged into three stages. Thereby, the size of the adsorption chiller 300 which is multistaged into three stages can be reduced compared to the conventional adsorption chiller 200. Note that in the adsorption chiller 300, the example in which the second adsorption reaction section 18 which is closer to the condenser 90 has the adsorption reactor 70 and the adsorption reactor 71, and the steam regenerating process is executed by the adsorption reactor 70 and the adsorption reactor 71 is shown, but in place of this, the adsorption reactor 30 and the adsorption reactor 50 in the first adsorption reaction section 13 may be coupled by a coupling pipe, and the steam regenerating process may be executed by the adsorption reactor 30 and the adsorption reactor 50.

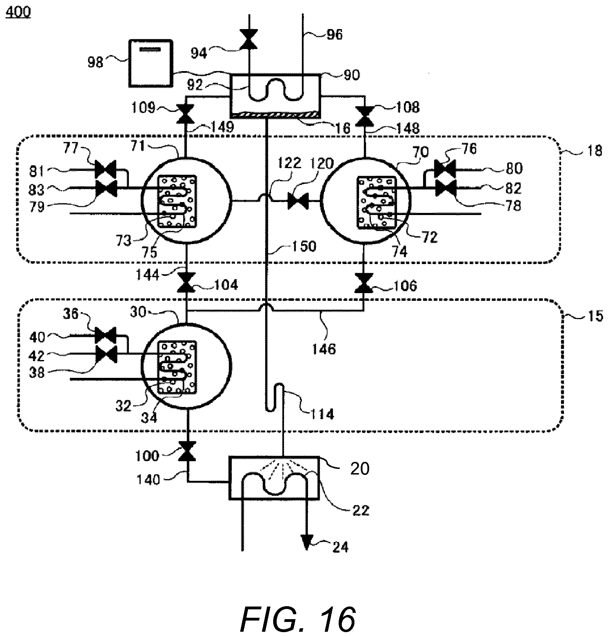

Fig. 16 is a schematic view showing another adsorption chiller 400. The adsorption chiller 400 has a first adsorption reaction section 15, a second adsorption reaction section 18, an evaporator 20, a condenser 90, and a control part 98. Note that in Fig. 16, elements which are common with Fig. 1 and Fig. 15 are given the same reference numbers, and an overlapped description will be omitted.

In the adsorption chiller 400, the first adsorption reaction section 15 has a single adsorption reactor 30. In this way, the first adsorption reaction section 15 which is closer to the evaporator 20 may be configured to have only an adsorption reactor 30. And, the second adsorption reaction section 18 which is closer to the condenser 90 has an adsorption reactor 70 and an adsorption reactor 71, and makes the adsorption reactor 70 and the adsorption reactor 71 execute the steam regenerating process. Thereby, adsorption and desorption of a second stage and a third stage in an adsorption chiller which is divided into multiple stages can be executed by the adsorption reactor 70 and the adsorption reactor 71.

In this way, the adsorption chiller 400 is an adsorption chiller which is configured of three adsorption reactors and is multistaged into three stages. Thereby, the size of the adsorption chiller 300 which is multistaged into three stages can be reduced compared to the conventional adsorption chiller 200.

Note that in the examples shown in Fig. 1, Fig. 15, the example in which the first adsorption reaction sections 12 and 13 have the two adsorption reactors 30, 50 is shown, but the number of the adsorption reactor(s) which the first adsorption reaction sections 12 and 13 have is not limited to two.
Also, the number of the adsorption reactor(s) which the second adsorption reaction section 18 has in the example shown in Fig. 15 and 16 is also not limited to two. In the adsorption chillers 10, 300 and 400 which are multistaged into three stages, if the total number of the adsorption reactor(s) is at least less than or equal to five, they can be made smaller with respect to the conventional adsorption chiller 200.

While the embodiments of the present invention have been described, the technical scope of the invention is not limited to the above described embodiments. It is apparent to persons skilled in the art that various alterations and improvements can be added to the above-described embodiments. It is also apparent from the scope of the claims that the embodiments added with such alterations or improvements can be included in the technical scope of the invention.

The operations, procedures, steps, and stages of each process performed by an apparatus, system, program, and method shown in the claims, embodiments, or diagrams can be performed in any order as long as the order is not indicated by "prior to," "before," or the like and as long as the output from a previous process is not used in a later process. Even if the process flow is described using phrases such as "first" or "next" in the claims, embodiments, or diagrams, it does not necessarily mean that the process must be performed in this order.

### EXPLANATION OF REFERENCES

10, 200, 300, 400: adsorption chiller,
12, 13, 15: first adsorption reaction section,
14, 18: second adsorption reaction section,
16: refrigerant,
20: evaporator,
22, 34, 54, 74, 75, 92: heat exchanger,
24: cold heat output pipe,
30, 50, 70, 71, 202, 204, 206, 208, 210, 212: adsorption reactor,
32, 52, 72, 73: adsorbent,
36, 38, 56, 58, 76, 77, 78, 79, 94, 100, 102, 104, 106, 108, 109, 110, 120, 220, 222, 224, 226,
228, 230, 232, 234: control valve,
40, 60, 80, 81, 96: cooling water source,
42, 62, 82, 83: hot water source,
90: condenser,
98: control part,
112, 122, 140, 142, 144, 146, 148, 149, 150, 240, 242, 244, 246, 248, 250, 252, 254: coupling pipe,
114: decompression valve

## Claims

1. An adsorption chiller (10) comprising:
an evaporator (20) which generates cold heat by vaporizing a liquefied refrigerant (16),
a first adsorption reaction section (12) which adsorbs the vaporized refrigerant (16) generated from the evaporator (20) and then vaporizes the refrigerant (16) again,
a second adsorption reaction section (14) which adsorbs the vaporized refrigerant (16) generated from the first adsorption reaction section (12) and then vaporizes the refrigerant (16) again, and
a condenser (90) which cools and liquefies the vaporized refrigerant (16) generated from the second adsorption reaction section (14) to supply the refrigerant (16) to the evaporator (20), wherein
at least one of the first adsorption reaction section (12) and the second adsorption reaction section (14) includes
at least two adsorption reactors (30, 50),
a first coupling pipe (112) which couples the two adsorption reactors (30, 50), and
a first control valve (110) which controls opening and closing of the first coupling pipe (112).

2. The adsorption chiller (10) according to Claim 1, wherein
the at least one is the first adsorption reaction section (12),
the second adsorption reaction section (14) has a single adsorption reactor (30) to which the at least two adsorption reactors (30, 50) are coupled.

3. The adsorption chiller (10) according to Claim 2 including:
a second coupling pipe (140) which couples one of the two adsorption reactor (30, 50) and the evaporator (20),
a second control valve (100) which controls opening and closing of the second coupling pipe (140),
a third coupling pipe (142) which couples another of the two adsorption reactors (30, 50) and the evaporator (20), and
a third control valve (102) which controls opening and closing of the third coupling pipe (142), wherein
when the first control valve (110) is open, the second control valve (100) and the third control valve (102) are closed.

4. The adsorption chiller (10) according to Claim 3, wherein
a refrigerant adsorption amount in the single adsorption reactor (30) of the second adsorption reaction section (14) is larger than any refrigerant adsorption amounts of the at least two adsorption reactors (30, 50) of the first adsorption reaction section (12).

5. An adsorption chilling method comprising:
an evaporating step which generates cold heat by vaporizing a liquefied refrigerant (16) in an evaporator (20),
a first adsorption reaction step which adsorbs the vaporized refrigerant (16) generated from the evaporator (20) in a first adsorption reaction section (12) and then vaporizes the refrigerant (16) again,
a second adsorption reaction step which adsorbs the vaporized refrigerant (16) generated from the first adsorption reaction section (12) in a second adsorption reaction section (14) and then vaporizes the refrigerant (16) again, and
a condensing step which cools and liquefies the vaporized refrigerant (16) generated from the second adsorption reaction section (14) in a condenser (90) to supply the refrigerant (16) to the evaporator (20), wherein
at least one of the first adsorption reaction step and the second adsorption reaction step includes a first coupling step which couples at least two adsorption reactors (30, 50) which are included at least one of the first adsorption reaction section (12) and the second adsorption reaction section (14).

6. The adsorption chilling method according to Claim 5 including:
a second coupling step which couples one of the two adsorption reactors (30, 50) and the evaporator (20), and
a third coupling step which couples another of the two adsorption reactors (30, 50) and the evaporator (20), wherein
when the first coupling step is being executed, the second coupling step and the third coupling step are not executed.

7. The adsorption chilling method according to Claim 5 or 6,
wherein the first coupling step is executed, when a temperature of hot water which is supplied to any of the first adsorption reaction step and the second adsorption reaction step is lower than a predetermined temperature,
the first coupling step is not executed, when the temperature of hot water is higher than a predetermined temperature.

## Patentansprüche

1. Adsorptionskältemaschine (10) mit:
einem Verdampfer (20), der durch Verdampfen eines verflüssigten Kältemittels (16) Kaltwärme erzeugt;
einem ersten Adsorptionsreaktionsabschnitt (12), der das durch den Verdampfer (20) erzeugte verdampfte Kältemittel (16) adsorbiert und dann das Kältemittel (16) erneut verdampft;
einem zweiten Adsorptionsreaktionsabschnitt (14), der das durch den ersten Adsorptionsreaktionsabschnitt (12) verdampfte Kältemittel (16) adsorbiert und dann das Kältemittel (16) erneut verdampft; und
einem Kondensator (90), der das durch den zweiten Adsorptionsreaktionsabschnitt (14) erzeugte verdampfte Kältemittel (16) abkühlt und verflüssigt, um das Kältemittel (16) dem Verdampfer (20) zuzuführen, wobei
mindestens ein Adsorptionsreaktionsabschnitt unter dem ersten Adsorptionsreaktionsabschnitt (12) und dem zweiten Adsorptionsreaktionsabschnitt (12) aufweist:
mindestens zwei Adsorptionsreaktoren (30, 50),
ein erstes Verbindungsrohr (112), das die zwei Adsorptionsreaktoren (30, 50) verbindet, und
ein erstes Steuerventil (110) zum Steuern des Öffnungs- und Schließvorgangs des ersten Verbindungsrohrs (112).

2. Adsorptionskältemaschine (10) nach Anspruch 1, wobei
der mindestens eine Adsorptionsreaktionsabschnitt der erste Adsorptionsreaktionsabschnitt (12) ist,
der zweite Adsorptionsreaktionsabschnitt (14) einen einzelnen Adsorptionsreaktor (30) aufweist, mit dem die mindestens zwei Adsorptionsreaktoren (30, 50) verbunden sind.

3. Adsorptionskältemaschine (10) nach Anspruch 2, mit:
einem zweiten Verbindungsrohr (140), das einen der beiden Adsorptionsreaktoren (30, 50) und den Verdampfer (20) verbindet;
einem zweiten Steuerventil (100) zum Steuern des Öffnungs- und Schließvorgangs des zweiten Verbindungsrohrs (140);
einem dritten Verbindungsrohr (142), das einen anderen der beiden Adsorptionsreaktoren (30, 50) und den Verdampfer (20) verbindet; und
einem dritten Steuerventil (102) zum Steuern des Öffnungs- und Schließvorgangs des dritten Verbindungsrohrs (142),
wobei, wenn das erste Steuerventil (110) offen ist, das zweite Steuerventil (100) und das dritte Steuerventil (102) geschlossen sind.

4. Adsorptionskältemaschine (10) nach Anspruch 3, wobei eine Kältemitteladsorptionsmenge im einzelnen Adsorptionsreaktor (30) des zweiten Adsorptionsreaktionsabschnitts (14) größer ist als jegliche Kältemitteladsorptionsmengen der mindestens zwei Adsorptionsreaktoren (30, 50) des ersten Adsorptionsreaktionsabschnitts (12).

5. Adsorptionsabkühlverfahren, mit:
einem Verdampfungsschritt, der durch Verdampfen eines verflüssigten Kältemittels (16) in einem Verdampfer (20) Kaltwärme erzeugt;
einem ersten Adsorptionsreaktionsschritt, der das durch den Verdampfer (20) erzeugte verdampfte Kältemittel (16) in einem ersten Adsorptionsreaktionsabschnitt (12) adsorbiert und dann das Kältemittel (16) erneut verdampft;
einem zweiten Adsorptionsreaktionsschritt, der das durch den ersten Adsorptionsreaktionsabschnitt (12) erzeugte verdampfte Kältemittel (16) in einem zweiten Adsorptionsreaktionsabschnitt (14) adsorbiert und dann das Kältemittel (16) erneut verdampft; und
einem Kondensationsschritt, der das durch den zweiten Adsorptionsreaktionsabschnitt (14) erzeugte verdampfte Kältemittel (16) in einem Kondensator (90) abkühlt und verflüssigt, um das Kältemittel (16) dem Verdampfer (20) zuzuführen, wobei
mindestens ein Adsorptionsreaktionsschritt unter dem ersten Adsorptionsreaktionsschritt und dem zweiten Adsorptionsreaktionsschritt einen ersten Verbindungsschritt aufweist, in dem mindestens zwei Adsorptionsreaktoren (30, 50) verbunden werden, die in mindestens einem unter dem ersten Adsorptionsreaktionsabschnitt (12) und dem zweiten Adsorptionsreaktionsabschnitt (14) vorgesehen sind.

6. Verfahren nach Anspruch 5, mit:
einem zweiten Verbindungsschritt, in dem einer der beiden Adsorptionsreaktoren (30, 50) und der Verdampfer (20) verbunden werden; und
einem dritten Verbindungsschritt, in dem ein anderer der beiden Adsorptionsreaktoren (30, 50) und der Verdampfer (20) verbunden werden, wobei,
wenn der erste Verbindungsschritt ausgeführt wird, der zweite Verbindungsschritt und der dritte Verbindungsschritt nicht ausgeführt werden.

7. Verfahren nach Anspruch 5 oder 6, wobei
der erste Verbindungsschritt ausgeführt wird, wenn eine Temperatur von heißem Wasser, das in einem beliebigen unter dem ersten Adsorptionsreaktionsschritt und dem zweiten Adsorptionsreaktionsschritt zugeführt wird, niedriger ist als eine vorgegebene Temperatur, und
der erste Verbindungsschritt nicht ausgeführt wird, wenn die Temperatur des heißen Wassers höher ist als eine vorgegebene Temperatur.

## Revendications

1. Refroidisseur par adsorption (10) comprenant :
un évaporateur (20) qui génère de la chaleur froide en vaporisant un réfrigérant (16) liquéfié,
une première section de réaction d'adsorption (12) qui adsorbe le réfrigérant (16) vaporisé généré à partir de l'évaporateur (20) et vaporise ensuite une nouvelle fois le réfrigérant (16),
une seconde section de réaction d'adsorption (14) qui adsorbe le réfrigérant (16) vaporisé généré à partir de la première section de réaction d'adsorption (12) et vaporise ensuite une nouvelle fois le réfrigérant (16), et
un condenseur (90) qui refroidit et liquéfie le réfrigérant (16) vaporisé généré à partir de la seconde section de réaction d'adsorption (14) pour alimenter le réfrigérant (16) dans l'évaporateur (20), où
au moins une parmi la première section de réaction d'adsorption (12) et la seconde section de réaction d'adsorption (14) comprend
au moins deux réacteurs d'adsorption (30, 50),
une première conduite de couplage (112) qui accouple les deux réacteurs d'adsorption (30, 50), et
une première vanne de commande (110) qui commande l'ouverture et la fermeture de la première conduite de couplage (112).

2. Refroidisseur par adsorption (10) selon la revendication 1, dans lequel
l'au moins une section est la première section de réaction d'adsorption (12),
la seconde section de réaction d'adsorption (14) a un seul réacteur d'adsorption (30) auquel les au moins deux réacteurs d'adsorption (30, 50) sont couplés.

3. Refroidisseur par adsorption (10) selon la revendication 2, incluant :
une deuxième conduite de couplage (140) qui couple l'un des deux réacteurs d'adsorption (30, 50) et l'évaporateur (20),
une deuxième vanne de commande (100) qui commande l'ouverture et la fermeture de la deuxième conduite de couplage (140),
une troisième conduite de couplage (142) qui couple un autre des deux réacteurs d'adsorption (30, 50) et l'évaporateur (20), et
une troisième vanne de commande (102) qui commande l'ouverture et la fermeture de la troisième conduite de couplage (142), où,
lorsque la première vanne de commande (110) est ouverte, la deuxième vanne de commande (100) et la troisième vanne de commande (102) sont fermées.

4. Refroidisseur par adsorption (10) selon la revendication 3, dans lequel
une quantité d'adsorption de réfrigérant dans le seul réacteur d'adsorption (30) de la seconde section de réaction d'adsorption (14) est supérieure à des quantités d'adsorption de réfrigérant quelconques des au moins deux réacteurs d'adsorption (30, 50) de la première section de réaction d'adsorption (12).

5. Procédé de refroidissement par adsorption, comprenant :
une étape d'évaporation qui génère de la chaleur froide par vaporisation d'un réfrigérant (16) liquéfié dans un évaporateur (20),
une première étape de réaction d'adsorption qui adsorbe le réfrigérant (16) vaporisé généré à partir de l'évaporateur (20) dans une première section de réaction d'adsorption (12) et ensuite vaporise le réfrigérant (16) une nouvelle fois,
une seconde étape de réaction d'adsorption qui adsorbe le réfrigérant (16) vaporisé généré à partir de la première section de réaction d'adsorption (12) dans une seconde section de réaction d'adsorption (14) et ensuite vaporise le réfrigérant (16) une nouvelle fois, et
une étape de condensation qui refroidit et liquéfie le réfrigérant (16) vaporisé généré à partir de la seconde section de réaction d'adsorption (14) dans un condenseur (90) pour alimenter le réfrigérant (16) dans l'évaporateur (20), où
au moins une parmi la première étape de réaction d'adsorption et la seconde étape de réaction d'adsorption inclut une première étape de couplage qui couple au moins deux réacteurs d'adsorption (30, 50) qui sont inclus dans au moins une parmi la première section de réaction d'adsorption (12) et la seconde section de réaction d'adsorption (14).

6. Procédé de refroidissement par adsorption selon la revendication 5, incluant :
une deuxième étape de couplage qui couple l'un des deux réacteurs d'adsorption (30, 50) et l'évaporateur (20), et
une troisième étape de couplage qui couple un autre des deux réacteurs d'adsorption (30, 50) et l'évaporateur (20), où,
lorsque la première étape de couplage est en train d'être exécutée, la deuxième étape de couplage et la troisième étape de couplage ne sont pas exécutées.

7. Procédé de refroidissement par adsorption selon la revendication 5 ou 6,
dans lequel, la première étape de couplage est exécutée lorsqu'une température d'eau chaude qui est alimentée à une quelconque étape parmi la première étape de réaction d'adsorption et la seconde étape de réaction d'adsorption est inférieure à une température prédéterminée,
la première étape de couplage n'est pas exécutée lorsque la température de l'eau chaude est supérieure à une température prédéterminée.
